# NEUE EUROPÄISCHE PATENTSCHRIFT

(11) **EP 3 024 666 B2**
(45) Veröffentlichungstag und Bekanntmachung des Hinweises auf die Entscheidung über den Einspruch: **02.03.2022**
(45) Hinweis auf die Patenterteilung: 18.07.2018
(21) Anmeldenummer: 14744815.3
(22) Anmeldetag: 24.07.2014
(51) Int. Cl.: B42D 25/305, G07D 7/00, G06K 19/06, G06K 7/14, G06K 9/00

(54) **VERFAHREN ZUR ÜBERPRÜFUNG DER ECHTHEIT EINES DOKUMENTES**
METHOD FOR VERIFYING THE AUTHENTICITY OF A DOCUMENT
PROCÉDÉ POUR VÉRIFIER L'AUTHENTICITÉ DE DOCUMENTS

(30) Priorität: 25.07.2013 DE 102013107951
(43) Veröffentlichungstag der Anmeldung: 01.06.2016
(73) Patentinhaber: Bundesdruckerei GmbH, 10969 Berlin (DE)
(72) Erfinder: KOSIOR, Olga, 12105 Berlin (DE); GUTMANN, Roland, 14612 Falkensee (DE)
(74) Vertreter: Patentship Patentanwaltsgesellschaft mbH
(86) Internationale Anmeldenummer: PCT/EP2014/065898
(87) Internationale Veröffentlichungsnummer: WO 2015/011221

(56) Entgegenhaltungen:
- WO-A1-00/04516
- WO-A1-2006/056268
- WO-A1-2007/017275
- WO-A1-2012/035306
- WO-A2-2004/081649
- DE-A1-102005 008 035
- DE-A1-102011 004 787
- DE-A1-102011 121 566
- KR-B1- 101 084 347
- US-A- 5 095 196
- US-A1- 2003 050 961
- US-B1- 6 758 391

## Beschreibung

Die vorliegende Erfindung betrifft ein Verfahren zur Überprüfung der Echtheit eines Dokumentes.

Die Patentschrift US 5,095,196 ist auf ein System und ein Verfahren gerichtet, welches eine Autorisation einer Person überprüfen soll, ob die Person autorisiert ist, einen Checkpoint passieren zu dürfen.

Die Offenlegungsschrift WO 2004/081649 A2 zeigt ein Diagramm, welches eine Authentifizierungstechnik illustrieren soll. Hierbei wird ein Identifikationsdokument bildlich erfasst. Das Identifikationsdokument weist ein erstes und ein zweites digitales Wasserzeichen auf.

Zur Überprüfung der Echtheit eines Dokumentes können neben optisch erfassbaren Sicherheitsmerkmalen auch visuelle Merkmale, beispielsweise ein Personenbild eines Identifikationsdokumentes, herangezogen werden.

Nachteilig an den bekannten Überprüfungskonzepten ist jedoch, dass die zu überprüfenden Dokumente üblicherweise eine begrenzte Menge an Informationen bereitstellen, welche für die Überprüfung der Echtheit herangezogen werden kann. So stellt beispielsweise ein Identifikationsdokument nur ein einziges Personenbild zur Verfügung, was den Überprüfungsvorgang erschwert. Zur Lösung dieses Problems schlägt die Druckschrift DE 10 2011 004 787 A1 vor, eine Modellinformation bereitzustellen, welche eine Modellierung einer weiteren Ansicht einer Person ermöglicht. Die modellierte Ansicht kann angezeigt und für den visuellen Abgleich mit der sich identifizierenden Person verwendet werden.

Es ist die Aufgabe der vorliegenden Erfindung, ein Konzept für die Überprüfung der Echtheit eines Identifikationsdokumentes zu schaffen, bei dem beliebige Zusatzinformationen für die Überprüfung der Echtheit eines Dokumentes bereitgestellt werden können.

Diese Aufgabe wird durch die Merkmale der unabhängigen Ansprüche gelöst. Vorteilhafte Ausführungsform sind Gegenstand der abhängigen Ansprüche, der Beschreibung und der Figuren.

Die Erfindung basiert auf der Erkenntnis, dass die obige Aufgabe durch den Einsatz der erweiterten Realität (Augmented Reality) gelöst werden kann. Dabei werden gemeinsam mit einer beispielsweise mittels einer Bildkamera erfassten Abbildung eines Dokumentes eine oder mehrere Zusatzinformationen angezeigt bzw. der erfassten Abbildung überlagert. Die Zusatzinformationen können beispielsweise von einem Datenserver über ein Kommunikationsnetzwerk abgerufen werden. Unter "Augmeted Reality" wird gemäß einer Ausführungsform die Erweiterung der physischen realen Welt durch computergenerierte Informationen, in Echtzeit verstanden.

Die nachfolgenden Ausführungsformen werden exemplarisch in Bezug auf eine Zusatzinformation beschrieben. Die nachfolgenden Ausführungsbeispiele betreffen jedoch gemäß einem Aspekt auch den allgemeinen Fall mehrerer Zusatzinformationen.

Gemäß einem Aspekt betrifft die Erfindung ein Verfahren zur Überprüfung der Echtheit eines Dokumentes unter Verwendung einer Zusatzinformation gemäß Anspruch 1.

Die Zusatzinformation wird im Sinne der erweiterten Realität (Augmented Reality) zusätzlich zu der erfassten Abbildung angezeigt und kann zur visuellen Überprüfung der Echtheit des Dokumentes unter Verwendung der angezeigten Zusatzinformation dienen. Das Informationsmerkmal kann beispielsweise in der Gestalt eines Markers vorliegen.

Gemäß einer Ausführungsform werden die erfasste Abbildung und die Zusatzinformation zeitgleich auf derselben Anzeige angezeigt. Die Anzeige kann in Echtzeit erfolgen. Dies bedeutet, dass die erfasste Abbildung als Echtzeitbild bzw. Bewegtbild (Livebild) auf der Anzeige zusammen mit der Zusatzinformation angezeigt wird.

Die Zusatzinformation kann im Falle von Identifikationsdokumenten beispielsweise Personendaten oder weitere Personenansichten angeben.

Handelt es sich bei dem Dokument um Identifikationsdokument oder um ein Wertdokument, wie beispielsweise ein Zahlungsmittel, insbesondere eine Banknote, so kann die Zusatzinformation die Sicherheitsmerkmale des Dokumentes betreffen. Auf diese Weise kann eine Person bei der Überprüfung der Echtheit eines Zahlungsmittels unterstützt werden, in dem der Person die prüfbaren Sicherheitsmerkmale des Zahlungsmittels angezeigt werden. Die Sicherheitsmerkmale können ferner der erfassten Abbildung überlagert dargestellt werden, was die Erfassung und Überprüfung der Sicherheitsmerkmale des Zahlungsmittels vereinfacht.

Der Datenserver kann daher mehrere Zusatzinformationen bereitstellen, welche beispielsweise unterschiedlichen Personen und/oder unterschiedlichen Typen von Zusatzinformationen, zugeordnet sind.

Gemäß einer Ausführungsform wird die Abbildung des Dokumentes mittels einer Bildkamera eines Dokumentenlesegerätes, insbesondere Smartphones, erfasst und gemeinsam mit der Zusatzinformation, insbesondere durch die Zusatzinformation überlagert, auf einer Anzeige des Dokumentenlesegerätes angezeigt. Auf diese Weise kann, beispielsweise im Falle eines Identifikationsdokumentes, eine weitere Personenansicht, beispielsweise eine Profilansicht, angezeigt werden.

Die Bildkamera kann durch einen Bildscanner ersetzt werden.

Erfindungsgemäß betrifft bzw. gibt das Informationsmerkmal eine Netzwerkkommunikationsadresse an, wobei zur Bestimmung der Zusatzinformation eine Kommunikationsverbindung zu einem unter der Netzwerkkommunikationsadresse erreichbaren Datenserver über ein Kommunikationsnetzwerk aufgebaut wird und wobei die Zusatzinformation von dem Datenserver über das Kommunikationsnetzwerk abgerufen wird.

Gemäß einer Ausführungsform wird zum Abrufen der Zusatzinformation eine Personenidentifikation oder eine Dokumentenidentifikation oder eine auf die Zusatzinformation hinweisende Identifikation zu dem Datenserver übermittelt. Dadurch kann die Zusatzinformation in der Datenbank des Datenservers identifiziert werden. Die Identifikation kann beispielweise einen Typ der Zusatzinformation wie beispielsweise Personendaten, weitere Personenansichten, Angabe über Sicherheitsmerkmale des Dokumentes angeben.

Der Datenserver kann daher mehrere Zusatzinformationen bereitstellen, welche beispielsweise unterschiedlichen Personen und/oder unterschiedlichen Typen von Zusatzinformationen, zugeordnet sind.

Gemäß einer Ausführungsform codiert das Informationsmerkmal die Zusatzinformation, wobei zum Bestimmen der Zusatzinformation das Informationsmerkmal decodiert wird. Die Codierung kann beispielsweise eine binäre Codierung oder eine optische Codierung sein.

Gemäß einer Ausführungsform ist das Informationsmerkmal optisch codiert, insbesondere mittels eines eindimensionalen optischen Codes oder eines zweidimensionalen optischen Codes, wobei zur Bestimmung der Zusatzinformation das Identifikationsmerkmal decodiert wird. Zur Erfassung des Informationsmerkmals kann der optische Code in der erfassten Abbildung optisch detektiert werden.

Gemäß einer Ausführungsform ist das Dokument ein Identifikationsdokument einer Person, wobei das Dokument ein Personenbild umfasst, wobei das Informationsmerkmal dem Personenbild überlagert wird, und wobei zur Bestimmung der Zusatzinformation das Informationsmerkmal in der erfassten Abbildung des Personenbildes detektiert wird. Das Informationsmerkmal kann beispielsweise als optisches Muster, beispielsweise Pixelmuster, oder als Wasserzeichen dem Personenbild überlagert sein und detektiert werden.

Gemäß einer Ausführungsform wird das Informationsmerkmal durch ein optisches Sicherheitsmerkmal des Dokumentes bereitgestellt, wobei zur Bestimmung der Zusatzinformation das Informationsmerkmal in der erfassten Abbildung des optischen Sicherheitsmerkmals detektiert wird. Das Sicherheitsmerkmal kann beispielsweise eine geometrische Struktur formen und ein Weißlichtmerkmal, ein IR-Merkmal oder ein UV-Merkmal sein.

Gemäß einer Ausführungsform ist das Dokument ein Identifikationsdokument einer Person, wobei das Dokument ein Personenbild mit einer ersten Personenansicht umfasst und wobei die Zusatzinformation eine zweite Personenansicht, insbesondere ein Profilbild der Person, umfasst. Durch die Zusatzinformation können daher zusätzliche Personenansichten bereitgestellt werden.

Gemäß einer Ausführungsform ist das Dokument ein Identifikationsdokument einer Person, wobei die Zusatzinformation Personendaten oder eine Personeninformation umfasst.

Gemäß einem Aspekt betrifft die Erfindung ein Dokumentenlesegerät gemäß Anspruch 10.

Erfindungsgemäß weist das Dokumentenlesegerät eine Kommunikationsschnittstelle auf, wobei das Informationsmerkmal eine Netzwerkkommunikationsadresse angibt oder codiert, wobei der Prozessor ausgebildet ist, die Netzwerkkommunikationsadresse zu extrahieren oder zu decodieren, und wobei die Kommunikationsschnittstelle ausgebildet ist, zur Bestimmung der Zusatzinformation eine Kommunikationsverbindung zu einem unter der Netzwerkkommunikationsadresse erreichbaren Datenserver über ein Kommunikationsnetzwerk aufzubauen und die Zusatzinformation von dem Datenserver über das Kommunikationsnetzwerk abzurufen.

Gemäß einer Ausführungsform ist der Prozessor ausgebildet, das Identifikationsmerkmal in der erfassten Abbildung zu detektieren, insbesondere mittels einer Mustererkennung, zu detektieren. Das Identifikationsmerkmal kann beispielsweise ein optischer Code sein, welcher optisch erfasst werden kann.

Gemäß einer Ausführungsform codiert das Informationsmerkmal die Zusatzinformation, wobei der Prozessor ausgebildet ist, zum Bestimmen der Zusatzinformation das Informationsmerkmal zu decodieren. Die Codierung kann beispielsweise eine optische Codierung oder eine binäre Codierung sein.

Gemäß einer Ausführungsform ist die Kommunikationsschnittstelle ausgebildet, zum Abrufen der Zusatzinformation eine Personenidentifikation oder eine Dokumentenidentifikation oder eine auf die Zusatzinformation hinweisende Identifikation zu dem Datenserver zu übermitteln.

Gemäß einer Ausführungsform ist das Informationsmerkmal optisch codiert, insbesondere mittels eines eindimensionalen optischen Codes oder eines zweidimensionalen optischen Codes optisch codiert, und wobei der Prozessor zur Bestimmung der Zusatzinformation das Identifikationsmerkmal decodiert.

Gemäß einer Ausführungsform ist das Dokument ein Identifikationsdokument einer Person und umfasst ein Personenbild, wobei das Informationsmerkmal dem Personenbild überlagert ist, und wobei der Prozessor zur Bestimmung der Zusatzinformation das Informationsmerkmal in der erfassten Abbildung des Personenbildes detektiert.

Gemäß einer Ausführungsform ist das Informationsmerkmal ein optisches Sicherheitsmerkmal des Dokumentes, wobei der Prozessor zur Bestimmung der Zusatzinformation das Informationsmerkmal in der erfassten Abbildung des optischen Sicherheitsmerkmals detektiert.

Gemäß einer Ausführungsform ist das Dokument ein Identifikationsdokument einer Person und umfasst ein Personenbild mit einer ersten Personenansicht, wobei die Zusatzinformation eine zweite Personenansicht, insbesondere ein Profilbild der Person, umfasst, und wobei die Anzeige ausgebildet ist, die erste Personenansicht und die zweite Personenansicht gemeinsam, insbesondere nebeneinander, anzuzeigen.

Gemäß einer Ausführungsform ist das Dokument ein Identifikationsdokument einer Person und wobei die Zusatzinformation Personendaten oder eine Personeninformation umfasst, und wobei die Anzeige ausgebildet ist, die Personendaten oder die Personeninformation anzuzeigen.

Gemäß einem Aspekt betrifft die Erfindung ein Kommunikationssystem, mit dem erfindungsgemäßen Dokumentenlesegerät und einem Datenserver zur Bereitstellung der Zusatzinformation.

Der Datenserver kann ausgebildet sein, mehrere Zusatzinformationen bereitzustellen, welche beispielsweise unterschiedlichen Personen und/oder unterschiedlichen Typen von Zusatzinformationen, wie beispielsweise Personendaten, weitere Personenansichten, Angabe über Sicherheitsmerkmale des Dokumentes, zugeordnet sind.

Das Dokument kann eines der folgenden Dokumente sein: Identitätsdokument, wie Personalausweis, Reisepass, Zugangskontrollausweis, Berechtigungsausweis, Unternehmensausweis, Steuerzeichen oder Ticket, Geburtsurkunde, Führerschein oder Kraftfahrzeugausweis, Wertdokument, Zahlungsmittel, beispielsweise eine Bankkarte oder Kreditkarte oder Banknote. Das Dokument kann ferner einen elektronisch auslesbaren Schaltkreis, beispielsweise einen RFID-Chip, umfassen. Das Dokument kann ein- oder mehrlagig bzw. papier- und/oder kunststoffbasiert sein. Das Dokument kann aus kunststoffbasierten Folien aufgebaut sein, welche zu einem Kartenkörper mittels Verkleben und/oder Laminieren zusammengefügt werden, wobei die Folien bevorzugt ähnliche stoffliche Eigenschaften aufweisen.

Bei einem mehrlagigen Aufbau kann das Informationsmerkmal beispielsweise zwischen zwei Lagen, beispielsweise zwischen zwei Laminatschichten, angeordnet sein.

Die Zusatzinformation kann im Falle von Identifikationsdokumenten beispielsweise Personendaten oder weitere Personenansichten angeben.

Handelt es sich bei dem Dokument um ein Zahlungsmittel, beispielsweise um eine Banknote, so kann die Zusatzinformation die Sicherheitsmerkmale des Dokumentes betreffen. Auf diese Weise kann eine Person bei der Überprüfung der Echtheit eines Zahlungsmittels unterstützt werden, in dem der Person die prüfbaren Sicherheitsmerkmale des Zahlungsmittels angezeigt werden. Die Sicherheitsmerkmale können ferner der erfassten Abbildung überlagert dargestellt werden, was die Überprüfung der Sicherheitsmerkmale des Zahlungsmittels vereinfacht.

Gemäß einem Aspekt betrifft die Erfindung ein Computerprogramm zum Ausführen des Verfahrens Überprüfung der Echtheit eines Dokumentes, wenn das Computerprogramm auf einem Computer, insbesondere einem Dokumentenlesegerät, ausgeführt wird.

Weitere Ausführungsbeispiele werden Bezug nehmend auf die beiliegenden Figuren erläutert. Es zeigen:
Fig. 1 ein Dokumentenlesegerät;
Fig. 2 ein Dokument;
Fig. 3 ein Kommunikationssystem; und
Fig. 4 ein Ablaufdiagramm eines Verfahrens zur Überprüfung der Echtheit eines Dokumentes.

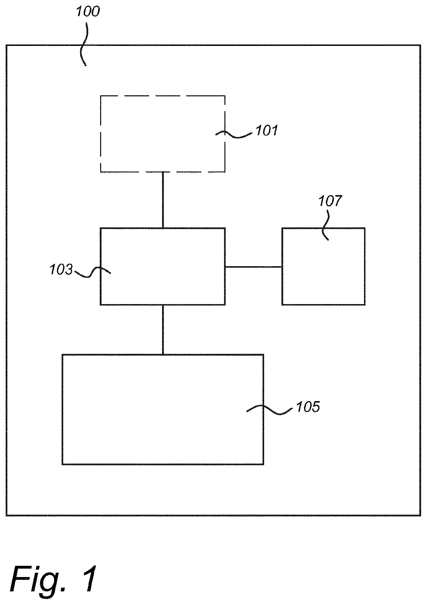

Fig. 1 zeigt ein Dokumentenlesegerät 100 zur visuellen Überprüfung der Echtheit eines Dokumentes unter Verwendung einer Zusatzinformation, welche durch das Dokument bereitgestellt ist.

Das Dokumentenlesegerät 100 umfasst eine schematisch angedeutete Bildkamera 101, welche in Fig. 1 nicht explizit dargestellt ist, zum Erfassen einer Abbildung des Dokumentes und einen Prozessor 103 zum Erfassen des Informationsmerkmals in der erfassten Abbildung und zum Bestimmen der Zusatzinformation auf der Basis des erfassten Informationsmerkmals. Das Dokumentenlesegerät 100 umfasst ferner eine Anzeige 105 zum Anzeigen der erfassten Abbildung gemeinsam mit der Zusatzinformation, um die Echtheit des Dokumentes zu überprüfen.

Das Dokumentenlesegerät 100 kann ein stationäres Dokumentenlesegerät oder ein mobiles Dokumentenlesegerät, beispielsweise ein mobiles Kommunikationsgerät, insbesondere ein Smartphone, sein.

Bei einem mobilen Dokumentenlesegerät 100 können die Bildkamera 101 und die Anzeige 105 an gegenüberliebenden Seiten des Dokumentenlesegerätes 100 angeordnet sein. So können die Bildkamera 101 und die Anzeige 105 Elemente eines Smartphones sein.

Bei einem stationären Dokumentenlesegerät 100 kann die Bildkamera 101 unterhalb einer in Fig. 1 nicht dargestellten Dokumentenauflage angeordnet sein.

Die Anzeige 105 kann dann beispielsweise durch einen separaten Bildschirm gebildet sein.

Das Dokumentenlesegerät 100 umfasst ferner eine Kommunikationsschnittstelle 107, welche beispielsweise drahtlos und ausgebildet ist, gemäß WLAN, UMTS, Bluetooth, GSM oder LTE über ein Kommunikationsnetzwerk zu kommunizieren.

Gemäß einer Ausführungsform kann das Informationsmerkmal eine Netzwerkkommunikationsadresse angeben oder codieren, unter welcher die Zusatzinformation abgerufen werden kann. Der Prozessor 103 ist ausgebildet, die Netzwerkkommunikationsadresse in der erfassten Abbildung zu extrahieren oder zu decodieren, falls die Netzwerkkommunikationsadresse codiert ist, und die Kommunikationsschnittstelle 105 ansteuern, um eine Kommunikationsverbindung zu einem unter der Netzwerkkommunikationsadresse erreichbaren Datenserver über ein Kommunikationsnetzwerk aufzubauen und die Zusatzinformation von dem Datenserver über das Kommunikationsnetzwerk abzurufen bzw. zu empfangen. Die empfangene Zusatzinformation wird mittels der Anzeige 105 gemeinsam mit der erfassten Abbildung im Sinne der Augmented Reality dargestellt. Auf diese Weise können weitere Zusatzinformationen bereitgestellt und angezeigt werden, welche das durch das Dokument selbst nicht bereitgestellt werden.

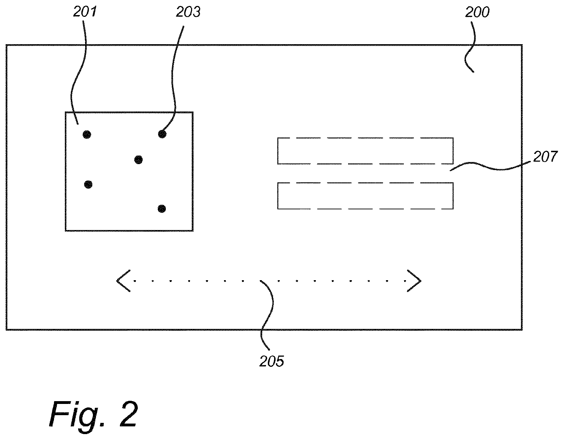

Fig. 2 zeigt ein Dokument 200, das ein optisch erfassbares Informationsmerkmal 201 umfasst.

Das Dokument 200 kann ein Identifikationsdokument, beispielsweise ein Personalausweis oder ein Reisepass, ein Wertdokument, ein Sicherheitsdokument oder ein Zahlungsmittel sein. Gemäß einer Ausführungsform kann die Zusatzinformation Sicherheitsmerkmale des Dokumentes 200 angeben, welche zur visuellen Überprüfung der Echtheit des Sicherheitsdokumentes auf einer Anzeige dargestellt werden können. Dadurch können auch sicherheitsfremde Personen in die Lage versetzt werden, die Sicherheitsmerkmale zu überprüfen.

Die Zusatzinformation kann jedoch, insbesondere im Falle eines Identifikationsdokumentes, weitere Personenangaben oder Informationen umfassen. Diese Angaben können weitere Personenansichten oder weitere Personendaten wie beispielsweise Namen, Adressen oder weitere, beispielsweise sicherheitsrelevante Daten, umfassen. Die Zusatzinformation kann in dem Dokument 200 beispielsweise als ein Sicherheitsmerkmal, als ein graphischer Code, als eine Angabe in einer maschinenlesbaren Zone eines Identifikationsdokumentes, als ein Wasserzeichen oder als ein einem Personenbild überlagertes graphisches Muster enthalten sein.

Gemäß der in Fig. 2 beispielhaft dargestellten Ausführungsform ist das Dokument 200 ein Identifikationsdokument einer Person mit einem Personenbild 201. Die Zusatzinformation ist beispielhaft als ein dem Personenbild 201 überlagertes graphisches Muster 203 überlagert.

Das graphische Muster 203 kann beispielsweise für die maschinelle Erfassung mittels einer Bildkamera oder eines Scanners ausgelegt sein und beispielsweise einzelne verteilte Pixel oder Bildpunkte umfassen. Das graphische Muster 203 kann dem Personenbild 201 überlagert verteilt und/oder Eckorientierungs- bzw. Ausrichtungselemente aufweisen, welche an den Ecken des Personenbildes 201 angeordnet werden können. Dadurch kann ein zweidimensionaler graphischer Code realisiert werden.

Das Dokument 200 kann ferner eine Maschinenlesbare Zone 205 oder Sicherheitsmerkmale 207 aufweisen, welche gemäß einer Ausführungsform das Informationsmerkmal, beispielsweise als eine codierte Zahlen- und/oder Ziffernfolge, bereitstellen können.

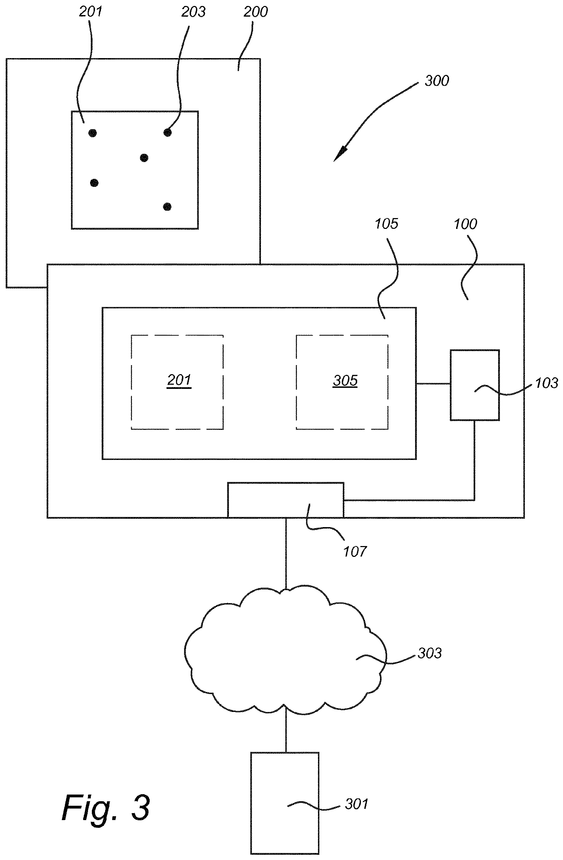

Fig. 3 zeigt ein Kommunikationssystem 300 mit dem Dokumentenlesegerät 100 und einem Datenserver 301. Das Dokumentenlesegerät 100, beispielsweise ein Smartphone, ist eingerichtet, mit dem Datenserver 301 über ein Kommunikationsnetzwerk 303 zu kommunizieren, um eine oder mehrere Zusatzinformationen 305 abzurufen.

Die Bildkamera 101 ist eingerichtet, eine Abbildung des Dokumentes 200, insbesondere eine Abbildung des Personenbildes 201 zu erfassen. Das in der erfassten Abbildung des Personenbildes 201 beispielhaft enthaltene Identifikationsmerkmal 203 wird durch den Prozessor 103 detektiert und/oder decodiert, um beispielsweise die Netzwerkkommunikationsadresse des Datenservers 301 zu erhalten. Daraufhin wird mittels der Kommunikationsschnittstelle 107 eine Kommunikationsverbindung, beispielsweise über GSM, UMTS oder WLAN, zu dem Datenserver 301 über das Kommunikationsnetzwerk 303 aufgebaut und die Zusatzinformation 305 wird von dem Datenserver 301 abgerufen und zu dem Dokumentenlesegerät 100 übertragen.

Die Zusatzinformation 305 kann eine weitere Ansicht der Person bzw. ein weiteres Personenbild und/oder weitere Personenangaben wie Namen, Geburtsdatum, Geburtsort, Wohnadresse, Landkarte des jeweiligen Landes und/oder einen Fingerabdruck der Person umfassen. Die Zusatzinformation 305 wird auf der Anzeige 105 gemeinsam mit dem erfassten Personenbild 201, beispielsweise neben dem erfassten Personenbild 201 oder diesem zumindest teilweise überlagert, dargestellt. Auf diese Weise können zur Echtheitsüberprüfung weiter Informationen bereitgestellt werden, welche nicht aus dem Dokument 100 unmittelbar auslesbar sind.

Gemäß einer Ausführungsform werden die erfasste Abbildung und die Zusatzinformation zeitgleich auf der Anzeige angezeigt, während beispielsweise das Dokumentenlesegerät 100 über dem Dokument geführt bzw. gehalten wird. Die erfasste Abbildung wird demnach unmittelbar und in Echtzeit angezeigt. Der Begriff der Echtzeit bedeutet, dass die erfasste Abbildung sozusagen als Echtzeitbild bzw. Bewegtbild (Livebild) auf der Anzeige 105 zusammen mit der Zusatzinformation angezeigt wird.

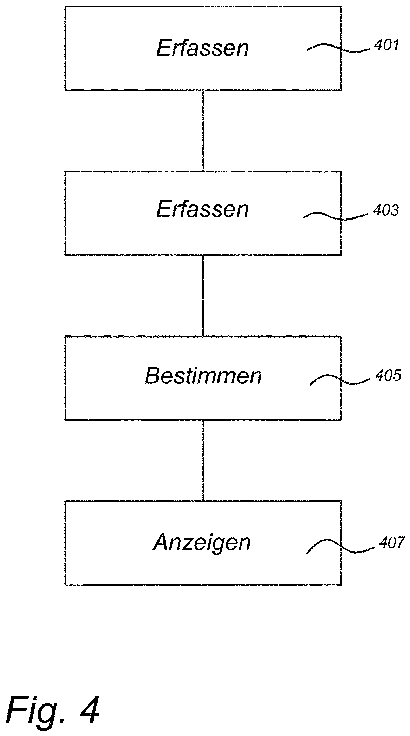

Fig. 4 zeigt ein Ablaufdiagramm eines Verfahrens zur Überprüfung der Echtheit eines Dokumentes unter Verwendung einer Zusatzinformation, wobei das Dokument ein Informationsmerkmal aufweist, welches auf die Zusatzinformation hinweist. Das Verfahren kann gemäß einer Ausführungsform auf dem Dokumentenlesegerät aus Fig. 3 ausgeführt sein. Das Verfahren umfasst das Erfassen 401 einer Abbildung des Dokumentes, beispielsweise mittels einer Bildkamera, das Erfassen 403 des Informationsmerkmals in der erfassten Abbildung, das Bestimmen 405 der Zusatzinformation auf der Basis des erfassten Informationsmerkmals und das Anzeigen 407 der erfassten Abbildung gemeinsam mit der Zusatzinformation, um die Echtheit des Dokumentes zu überprüfen.

Das Verfahren kann gemäß einer Ausführungsform auf dem Dokumentenlesegerät aus Fig. 3 ausgeführt werden.

Gemäß einer Ausführungsform dient als Informationsträger das Personenbild 201 selbst, das beispielsweise ein Lichtbild ist. Dabei kann auch keine weitere Erweiterung eines physischen Datenträgers durch computergenerierte Informationen stattfinden.

Mit dieser Methode lässt sich ein Dokument auf seine Echtheit überprüfen. Das Lichtbild enthält verschlüsselte, für das menschliche Auge nicht sichtbare Marker, die von einem Lesegerät erfasst und interpretiert werden, so dass auf dem Display des Lesegerätes die entsprechenden Informationen auf dem Lichtbild erscheinen. Dabei kann überprüft werden, ob das erfasste Bild mit den computergenerierten Informationen auf dem Bildschirm übereinstimmen. Die Verifikation kann beispielweise mittels Smartphone erfolgen. Damit wird eine schnelle und unkomplizierte Überprüfung von Ausweisdokumenten und Banknoten ermöglicht.

Das erfindungsgemäße Konzept kann vorteilhaft auf Identifikationsdokumenten, beispielsweise Ausweisdokumenten, oder Banknoten angewandt werden, indem beispielswiese gedruckte Informationen wie zum Beispiel das Lichtbild auf dem Ausweis mit einem optischen Sensor, z. B. Digitalkamera als Bildkamera erfasst werden. Die in dem Lichtbild enthaltenen Marker formen das Informationsmerkmal und können beispielsweise mittels eines Trackingverfahrens getrackt werden, wobei die Marker erkannt und verarbeitet werden. Die Marker können entweder aus bereits vorhandenen Bildinformationen oder nachträglich eingebaut, für das menschliche Auge nicht sichtbaren, Informationen bestehen. Über das reale Objekt können auf der Anzeige 105 Monitor zusätzliche Informationen, z. B. Lichtbild im Profil, Informationen zur Person, der Fingerabdruck, Informationen zum Visum, Fahrzeugklassen, Alter, Abgleich mit Chip etc. zur Verfügung gestellt.

Gemäß einer Ausführungsform wir die Grundlage für die erfindungsgemäße Anwendung der Augmented Reality eine Datenbank bzw. ein Datenserver mit der Datenbank, welche bzw. welcher die zusätzlichen Informationen bereitstellt. In Verbindung mit einem Applikationsprogramm kann beispielweise das Personenbild, beispielsweise ein Lichtbild eines Identifikationsdokumentes, mittels der Bildkamera, beispielsweise einer Digitalkamera eines Smartphones, erfasst werden. Die virtuellen Informationen zu der Person oder dem Dokument erscheinen auf dem Display des Smartphones als eine oder mehrere Zusatzinformationen.

Gemäß einer Ausführungsform wird durch die Verifikation beispielweise mittels eines Smartphones ein Sicherheitsmerkmal des Levels 2 dargestellt. Es kann von Privatpersonen ebenso verifiziert werden wie auch von Behörden oder Unternehmen, wobei beispielsweise ein Sicherheitsmerkmal hoheitlich oder privat ausgelegt werden kann. Das Smartphone kann daher gemäß einer Ausführungsform eine Anzeige auf einem Identifikationsdokument ersetzen, welche aufwendig und teuer in der Produktion ist.

Gemäß einer Ausführungsform werden eine oder mehrere Zusatzinformationen zu beispielsweise einer Person mithilfe der Bildkamera101 auf das Dokument bzw. auf dessen erfasste Abbildung 201 überlagert. Bei der oder den Zusatzinformationen kann es sich sowohl um Bilder aber auch um Text, wie Informationen über Ausstellungsdatum, Ausstellungsbehörde, Gültigkeitsdatum, Informationen über Chip, das verwendete Betriebssystem usw. handeln.

Die Bilderkennung kann entweder anhand von Markern, die teilweise das Bild überlagern, oder ohne eine Veränderung des Bildes erfolgen.

Die Zusatzinformation kann gemäß einer Ausführungsform die Prüfung erleichtern, da beispielsweise die Sicherheitsmerkmale des Dokumentes eingeblendet bzw. angezeigt werden können.

Die Zusatzinformation kann ferner ein Landeswappen oder eine Flagge sein. Hierbei können Zusatzinformationen betreffen ein Land oder ein Dokument erscheinen. Derartige Zusatzinformationen sind dann nicht notwendigerweise personalisiert, sondern landesspezifisch. Dadurch kann die Echtheitsprüfung von ausländischen Dokumenten erleichtert werden, deren äußerliche Erscheinungsformen nicht geläufig sind.

### Bezugszeichenliste

- 100: Dokumentenlesegerät
- 101: Bildkamera
- 103: Prozessor
- 105: Anzeige
- 107: Kommunikationsschnittstelle
- 200: Dokument
- 201: Personenbild
- 203: Informationsmerkmal
- 300: Kommunikationssystem
- 301: Server
- 303: Kommunikationsnetzwerk
- 305: Zusatzinformation
- 401: Erfassen
- 403: Erfassen
- 405: Bestimmen
- 407: Anzeigen

## Patentansprüche

1. Verfahren zur Überprüfung der Echtheit eines Dokumentes unter Verwendung zumindest einer Zusatzinformation, wobei das Dokument ein Informationsmerkmal aufweist, welches auf die Zusatzinformation hinweist, mit:
Erfassen (401) einer Abbildung des Dokumentes;
Erfassen (403) des Informationsmerkmals in der erfassten Abbildung;
Bestimmen (405) der Zusatzinformation auf der Basis des erfassten Informationsmerkmals; und
Anzeigen (407) der erfassten Abbildung gemeinsam mit der Zusatzinformation, um die Echtheit des Dokumentes zu überprüfen,
wobei das fnformationsmerkmal eine Netzwerkkommunikationsadresse betrifft, und wobei zur Bestimmung der Zusatzinformation eine Kommunikationsverbindung zu einem unter der Netzwerkkommunikationsadresse erreichbaren Datenserver über ein Kommunikationsnetzwerk aufgebaut wird und wobei die Zusatzinformation von dem Datenserver über das Kommunikationsnetzwerk abgerufen wird.

2. Verfahren nach Anspruch 1, wobei die Abbildung des Dokumentes mittels einer Bildkamera eines Dokumentenlesegerätes, insbesondere Smartphones, erfasst und gemeinsam mit der Zusatzinformation, insbesondere durch die Zusatzinformation überlagert, auf einer Anzeige des Dokumentenlesegerätes angezeigt wird.

3. Verfahren nach Anspruch 1 oder 2, wobei zum Abrufen der Zusatzinformation eine Personenidentifikation oder eine Dokumentenidentifikation oder eine auf die Zusatzinformation hinweisende Identifikation zu dem Datenserver übermittelt wird.

4. Verfahren nach einem der vorstehenden Ansprüche, wobei das Informationsmerkmal die Zusatzinformation codiert, und wobei zum Bestimmen der Zusatzinformation das Informationsmerkmal decodiert wird.

5. Verfahren nach einem der vorstehenden Ansprüche, wobei das Informationsmerkmal optisch codiert, insbesondere mittels eines eindimensionalen optischen Codes oder eines zweidimensionalen optischen Codes optisch codiert ist, und wobei zur Bestimmung der Zusatzinformation das Identifikationsmerkmal decodiert wird.

6. Verfahren nach einem der vorstehenden Ansprüche, wobei das Dokument ein Identifikationsdokument einer Person ist und ein Personenbild umfasst, wobei das Informationsmerkmal dem Personenbild überlagert ist, und wobei zur Bestimmung der Zusatzinformation das Informationsmerkmal in der erfassten Abbildung des Personenbildes detektiert wird.

7. Verfahren nach einem der vorstehenden Ansprüche, wobei das Informationsmerkmal durch ein optisches Sicherheitsmerkmal des Dokumentes bereitgestellt wird, und wobei zur Bestimmung der Zusatzinformation das Informationsmerkmal in der erfassten Abbildung des optischen Sicherheitsmerkmals detektiert wird.

8. Verfahren nach einem der vorstehenden Ansprüche, wobei das Dokument ein Identifikationsdokument einer Person ist und ein Personenbild mit einer ersten Personenansicht umfasst und wobei die Zusatzinformation eine zweite Personenansicht, insbesondere ein Profilbild der Person, umfasst.

9. Verfahren nach einem der vorstehenden Ansprüche, wobei das Dokument ein Identifikationsdokument einer Person ist und wobei die Zusatzinformation Personendaten oder eine Personeninformation umfasst.

10. Dokumentenlesegerät, insbesondere ein mobiles Kommunikationsgerät, zur Überprüfung der Echtheit eines Dokumentes unter Verwendung einer Zusatzinformation, wobei das Dokument ein Informationsmerkmal aufweist, welches auf die Zusatzinformation hinweist, mit:
einer Bildkamera (101) zum Erfassen einer Abbildung des Dokumentes;
einem Prozessor (103) zum Erfassen des Informationsmerkmals in der erfassten Abbildung und zum Bestimmen der Zusatzinformation auf der Basis des erfassten Informationsmerkmals; und
einer Anzeige (105) zum Anzeigen der erfassten Abbildung gemeinsam mit der Zusatzinformation, so dass die erfasste Abbildung gemeinsam mit der Zusatzinformation angezeigt werden kann, um die Echtheit des Dokumentes zu überprüfen,
wobei das Dokumentenlesegerät eine Kommunikationsschnittstelle (107) aufweist, wobei das Informationsmerkmal eine Netzwerkkommunikationsadresse angibt oder codiert, und wobei der Prozessor ausgebildet ist, die Netzwerkkommunikationsadresse zu extrahieren oder zu decodieren, und wobei die Kommunikationsschnittstelle (107) ausgebildet ist, zur Bestimmung der Zusatzinformation eine Kommunikationsverbindung zu einem unter der Netzwerkkommunikationsadresse erreichbaren Datenserver über ein Kommunikationsnetzwerk aufzubauen und die Zusatzinformation von dem Datenserver über das Kommunikationsnetzwerk abzurufen.

11. Dokumentenlesegerät nach Anspruch 10, wobei der Prozessor (103) ausgebildet ist, das Identifikationsmerkmal in der erfassten Abbildung zu detektieren, insbesondere mittels einer Mustererkennung, zu detektieren.

## Claims

1. A method for verifying the authenticity of a document using at least one additional information item, wherein the document comprises an information feature which refers to the additional information item, with:
acquisition (401) of an image of the document;
acquisition (403) of the information feature in the acquired image;
determination (405) of the additional information item on the basis of the acquired information feature; and
display (407) of the acquired image together with the additional information item in order to verify the authenticity of the document,
wherein the information feature relates to a network communication address, and wherein, for the determination of the additional information item, a communication connection with a data server which can be reached under the network communication address is set up via a communication network, and wherein the additional information item is retrieved from the data server via the communication network.

2. The method according to Claim 1, wherein the image of the document is acquired by means of an image camera of a document reading device, in particular of a smartphone, and displayed together with the additional information item, in particular overlaid with the additional information item, on a display of the document reading device.

3. The method according to Claim 1 or 2, wherein, for the retrieval of the additional information item, a personal identification or a document identification or an identification referring to the additional information item is transmitted to the data server.

4. The method according to any one of the preceding claims, wherein the information feature encodes the additional information item, and wherein the information feature is decoded for the determination of the additional information item.

5. The method according to any one of the preceding claims, wherein the information feature is optically encoded, in particular by means of a one-dimensional optical code or a two-dimensional optical code, and wherein the identification feature is decoded for the determination of the additional information item.

6. The method according to any one of the preceding claims, wherein the document is an identification document of a person and comprises a personal picture, wherein the information feature is overlaid on the personal picture, and wherein, for the determination of the additional information item, the information feature is detected in the acquired image of the personal picture.

7. The method according to any one of the preceding claims, wherein the information feature is provided by an optical security feature of the document, and wherein, for the determination of the additional information item, the information feature is detected in the acquired image of the optical security feature.

8. The method according to any one of the preceding claims, wherein the document is an identification document of a person and comprises a personal picture with a first view of the person, and wherein the additional information item comprises a second view of the person, in particular a profile view of the person.

9. The method according to any one of the preceding claims, wherein the document is an identification document of a person, and wherein the additional information item comprises personal data or personal information.

10. A document reading device, in particular a mobile communication device, for verifying the authenticity of a document using an additional information item, wherein the document comprises an information feature which refers to the additional information item, with:
an image camera (101) for acquiring an image of the document;
a processor (103) for acquiring the information feature in the acquired image and for determining the additional information item based on the acquired information feature; and
a display (105) for displaying the acquired image together with the additional information item so that the acquired image together with the additional information item can be displayed in order to verify the authenticity of the document.
wherein the document reading device comprises a communication interface (107), wherein the information feature indicates or encodes a network communication address, and wherein the processor is configured to extract or to decode the network communication address, and wherein the communication interface (107) is configured in order to set up, for the determination of the additional information item, a communication connection with a data server which can be reached under the network communication address via a communication network, and to retrieve the additional information item from the data server via the communication network.

11. The document reading device according to Claim 10, wherein the processor (103) is configured to detect the identification feature in the acquired image, in particular by means of a pattern recognition.

## Revendications

1. Procédé pour vérifier l'authenticité d'un document en utilisant au moins une information supplémentaire, dans lequel le document présente une caractéristique d'information, laquelle indique l'information supplémentaire, avec :
détection (401) d'une représentation du document ;
détection (403) de la caractéristique d'information dans la représentation détectée ;
détermination (405) de l'information supplémentaire sur la base de la caractéristique d'information détectée ; et
affichage (407) de la représentation détectée conjointement avec l'information supplémentaire, pour vérifier l'authenticité du document,
dans lequel la caractéristique d'information concerne une adresse de communication de réseau, et dans lequel pour la détermination de l'information supplémentaire, une liaison de communication à un serveur de données pouvant être atteint à l'adresse de communication de réseau est établie par le biais d'un réseau de communication et dans lequel l'information supplémentaire est appelée du serveur de données par le biais du réseau de communication.

2. Procédé selon la revendication 1, dans lequel la représentation du document est détectée au moyen d'une caméra d'un lecteur de document, en particulier smartphone, et affichée conjointement avec l'information supplémentaire, en particulier recouverte par l'information supplémentaire, sur un affichage du lecteur de document.

3. Procédé selon la revendication 1 ou 2, dans lequel pour l'appel de l'information supplémentaire, une identification de personne ou une identification de document ou une identification indiquant l'information supplémentaire est transmise au serveur de données.

4. Procédé selon l'une quelconque des revendications précédentes, dans lequel la caractéristique d'information code l'information supplémentaire, et dans lequel pour la détermination de l'information supplémentaire, la caractéristique d'information est décodée.

5. Procédé selon l'une quelconque des revendications précédentes, dans lequel la caractéristique d'information est codée optiquement, en particulier au moyen d'un code optique unidimensionnel ou d'un code optique bidimensionnel, et dans lequel pour la détermination de l'information supplémentaire, la caractéristique d'identification est décodée.

6. Procédé selon l'une quelconque des revendications précédentes, dans lequel le document est un document d'identification d'une personne et comprend une image de personne, dans lequel la caractéristique d'information recouvre l'image de personne, et dans lequel pour la détermination de l'information supplémentaire, la caractéristique d'information est détectée dans la représentation détectée de l'image de personne.

7. Procédé selon l'une quelconque des revendications précédentes, dans lequel la caractéristique d'information est mise à disposition par une caractéristique de sécurité optique du document, et dans lequel pour la détermination de l'information supplémentaire, la caractéristique d'information est détectée dans la représentation détectée de la caractéristique de sécurité optique.

8. Procédé selon l'une quelconque des revendications précédentes, dans lequel le document est un document d'identification d'une personne et comprend une image de personne avec une première vue de personne et dans lequel l'information supplémentaire comprend une deuxième vue de personne, en particulier une image de profil de la personne.

9. Procédé selon l'une quelconque des revendications précédentes, dans lequel le document est un document d'identification d'une personne et dans lequel l'information supplémentaire comprend des données de personnes ou une information de personne.

10. Lecteur de document, en particulier un appareil de communication mobile, pour vérifier l'authenticité d'un document en utilisant une information supplémentaire, dans lequel le document présente une caractéristique d'information, laquelle indique l'information supplémentaire, avec :
une caméra (101) pour la détection d'une représentation du document ;
un processeur (103) pour la détection de la caractéristique d'information dans la représentation détectée et pour la détermination de l'information supplémentaire sur la base de la caractéristique d'information détectée ; et
un affichage (105) pour l'affichage de la représentation détectée conjointement avec l'information supplémentaire, de sorte que la représentation détectée puisse être affichée conjointement avec l'information supplémentaire afin de vérifier l'authenticité du document,
dans lequel le lecteur de document présente une interface de communication (107), dans lequel la caractéristique d'information indique ou code une adresse de communication de réseau, et dans lequel le processeur est réalisé pour extraire ou décoder l'adresse de communication de réseau, et dans lequel l'interface de communication (107) est réalisée pour établir, pour la détermination de l'information supplémentaire, une liaison de communication à un serveur de données pouvant être atteint à l'adresse de communication de réseau par le biais d'un réseau de communication et appeler l'information supplémentaire du serveur de données par le biais du réseau de communication.

11. Lecteur de document selon la revendication 10, dans lequel le processeur (103) est réalisé pour détecter la caractéristique d'identification dans la représentation détectée, en particulier au moyen d'une détection de motif.
